# EUROPÄISCHE PATENTSCHRIFT

(11) **EP 1 541 451 B1**
(45) Veröffentlichungstag und Bekanntmachung des Hinweises auf die Patenterteilung: **18.08.2010**
(21) Anmeldenummer: 04025706.5
(22) Anmeldetag: 29.10.2004
(51) Int. Cl.: B62D 25/12, E05D 5/02

(54) **Schwenkbares Aufbauteil wie Deckel, Klappe, Haube oder dgl. für ein Kraftfahrzeug**
Pivotable body part like a lid, a bonnet or the same for a vehicle
Partie de carrosserie pivotante comme une porte de coffre, un capot moteur ou partie semblable pour un véhicule

(30) Priorität: 09.12.2003 DE 10357370
(43) Veröffentlichungstag der Anmeldung: 15.06.2005
(73) Patentinhaber: Dr. Ing. h.c. F. Porsche AG, 70435 Stuttgart (DE)
(72) Erfinder: Praznik, Franc, 71229 Leonberg (DE); Wrobel, Leszek, 71277 Rutesheim (DE)

(56) Entgegenhaltungen:
- JP-A- 56 067 668
- US-A- 4 886 312
- US-A1- 2001 005 920
- PATENT ABSTRACTS OF JAPAN Bd. 2002, Nr. 11, 6. November 2002 (2002-11-06) -& JP 2002 206368 A (MITSUIKE KOGYO KK), 26. Juli 2002 (2002-07-26)

## Beschreibung

Die Erfindung betrifft ein schwenkbares Aufbauteil wie Deckel, Klappe, Haube oder dgl. für ein Kraftfahrzeug gem. dem Oberbegriff des Patentanspruchs 1.

Schwenkbare Aufbauteile an Kraftfahrzeugen werden bei der Fertigung manuell eingestellt. Die Montage im Rohbau erfolgt bei bekannten Anordnungen durch mehrmaliges Öffnen und Schließen des schwenkbaren Aufbauteils, Lösen und Anziehen der Befestigungsschrauben, bis umlaufend die optimalen Fugenmaße erreicht sind. Das schwenkbare Bauteil muss manuell zwischen den beiden gegenüberliegenden Seitenteilen in Y-Richtung und zusätzlich in X-Richtung ausgerichtet werden. Das Fixieren des schwenkbaren Aufbauteils erfolgt in geöffnetem Zustand des schwenkbaren Bauteils. Je nach Geschick des Monteurs ist bei der Montage ein mehrmaliges Korrigieren der Position des schwenkbaren Bauteils erforderlich, so dass ein hoher, zeitintensiver Montageaufwand entsteht.

Die JP 56 067668 A offenbart ein gattungsgemäßes schwenkbares Aufbauteil wie Deckel, Klappe, Haube oder dgl. für ein Kraftfahrzeug, das in eine Öffnung des Aufbaus eingesetzt und umfangsseitig von feststehenden Aufbauteilen umgeben ist, wobei zur Anlenkung des schwenkbaren Aufbauteils Scharniere vorgesehen sind, die einerseits mit dem schwenkbaren Aufbauteil und andererseits mit einem angrenzenden feststehenden Aufbauteil verbunden sind.

Zumindest ein dem feststehenden Aufbauteil zugeordneter Befestigungspunkt jedes Scharniers ist außerhalb der Kontur des schwenkbaren Aufbauteils angeordnet, wobei das angrenzende feststehende Aufbauteil durch ein Innenteil und ein als Montageteil ausgebildetes, lösbar befestigbares Außenteil gebildet wird, wobei das bereichsweise die Karosserieaußenhaut bildende Außenteil die vorgelagerten Befestigungspunkte des schwenkbaren Aufbauteils abdeckt.

Aufgabe der Erfindung ist es, solche Vorkehrungen an einem schwenkbaren Bauteil zu treffen, dass der Montageaufwand deutlich verringert wird und dass das schwenkbare Bauteil bereits in seiner Schließstellung lagerichtig zum angrenzenden Aufbau einstellbar und in der eingestellten Lage festlegbar ist.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, dass durch die außerhalb der Kontur des schwenkbaren Aufbauteils liegenden Befestigungspunkte für das schwenkbare Aufbauteil nur ein einmaliges Justieren und Befestigen des schwenkbaren Aufbauteils erforderlich ist, wodurch der Montageaufwand deutlich verringert wird und stets ein optisch ansprechender Fugenverlauf erzielbar ist. Das schwenkbare Aufbauteil lässt sich bereits in seiner Schließstellung von der Außenseite her einstellen und festlegen. Die außerhalb des schwenkbaren Aufbauteils liegenden Befestigungspunkte des Scharniers werden durch ein Montageteil abgedeckt, das ein Außenteil des angrenzenden feststehenden Aufbauteils bildet, wobei das Außenteil lösbar an einem darunterliegenden Innenteil befestigbar ist. Das Montageteil wird durch Einsteckverbindungen, Schraubverbindungen oder dgl. am feststehenden Innenteil des Aufbauteils befestigt. Dieses Bauprinzip ist sowohl im Heckbereich als auch im Bugbereich eines Kraftfahrzeuges anwendbar.

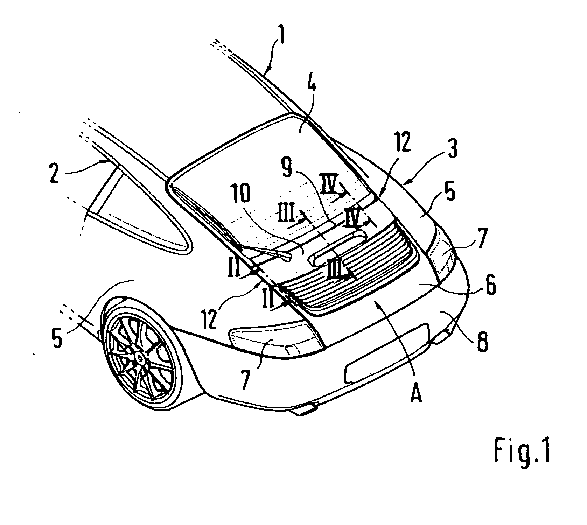

Ein Ausführungsbeispiel der Erfindung ist in der Zeichnung näher erläutert. Es zeigt
- Fig. 1: eine perspektivische Teilansicht von schräg hinten auf den Heckbereich eines Kraftfahrzeuges mit einem schwenkbaren Karosserieteil,
- Fig. 2: einen Schnitt nach der Linie II-II der Fig. 1 in größerer Darstellung,
- Fig. 3: einen Schnitt nach der Linie III-III der Fig. 1 in größerer Darstellung,
- Fig. 4: einen Schnitt nach der Linie IV-IV der Fig. 1 in größerer Darstellung,
- Fig. 5: eine perspektivische Teilansicht auf die heckseitige Öffnung des Aufbaus mit einem Scharnier für das schwenkbare Aufbauteil.

Das durch einen Personenwagen gebildete Kraftfahrzeug 1 weist einen Aufbau 2 auf, der im dargestellten Heckbereich 3 eine Heckscheibe 4, Seitenteile 5, ein schwenkbares Aufbauteil 6, Heckleuchten 7 und ein Heckendteil 8 umfasst. Zwischen dem unteren Rand 9 der Heckscheibe 4 und dem schwenkbaren Aufbauteil 6 erstreckt sich ein querverlaufendes feststehendes Aufbauteil 10, das beide Seitenteile 5 miteinander verbindet. Im Ausführungsbeispiel bildet das Aufbauteil 10 einen Heckquerträger.

Das schwenkbare Aufbauteil 6 ist in eine Öffnung 11 des Aufbaus 2 eingesetzt und wird oben durch das Aufbauteil 10, seitlich durch die Seitenteile 5 und unten durch das Heckendteil 8 begrenzt. Benachbart dem feststehenden Aufbauteil 10 ist das schwenkbare Aufbauteil 6 an beiden Längsseiten 12 über jeweils ein Scharnier 13 mit dem feststehenden Aufbau 2 verbunden und mittels der beiden Scharniere 13 von einer Schließstellung A in eine nicht näher dargestellte hochgeschwenkte Öffnungsstellung verlagerbar und umgekehrt. Auf der den beiden Scharnieren 13 abgekehrten Seite des schwenkbaren Aufbauteils 6 ist eine nicht näher gezeigte lösbare Verriegelungsvorrichtung für das schwenkbare Aufbauteil 6 vorgesehen.

Das schwenkbare Aufbauteil 6 wird durch eine Haube, eine Klappe einen Deckel oder dgl. gebildet.

Jedes Scharnier 13 ist einerseits mit dem schwenkbaren Aufbauteil 6 und andererseits mit dem angrenzenden feststehenden Aufbau 2 (feststehendes Aufbauteil 10) verbunden, vorzugsweise durch lösbare Befestigungen wie Schraubverbindungen oder dgl.. Im Ausführungsbeispiel sind die Scharniere 13 als Mehrgelenkscharniere wie z.B. Viergelenkscharniere ausgebildet. Jedes Scharnier 13 umfasst ein am feststehenden Aufbau 2 befestigtes Trägerteil 14, eine am schwenkbaren Karosserieteil 6 befestigtes Halteteil 15 sowie zwei Lenker 16, 17, deren eine Enden 18, 19 mit dem Trägerteil 14 und deren anderen Enden 20, 21 mit dem Halteteil 15 gelenkig verbunden sind.

Damit das schwenkbare Aufbauteil 6 bereits in der Schließstellung A lagerichtig zum angrenzenden feststehenden Aufbau 2 einstellbar ist (gleichmäßiger umlaufender Fugenverlauf) und in der eingestellten Lage festlegbar ist, ist vorgesehen, dass zumindest ein dem feststehenden Aufbauteil 10 zugeordneter Befestigungspunkt 22 jedes Scharniers 13 außerhalb der Kontur des schwenkbaren Aufbauteils 6 angeordnet ist. Die Befestigungspunkte 22 sind vorzugsweise als Schraubverbindungen 23 ausgebildet.

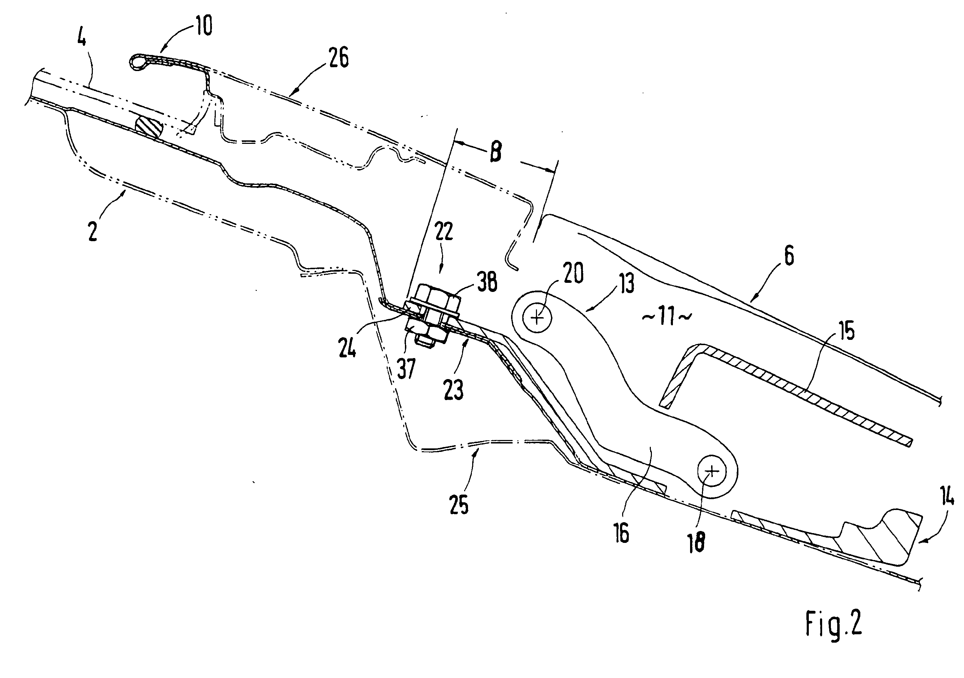

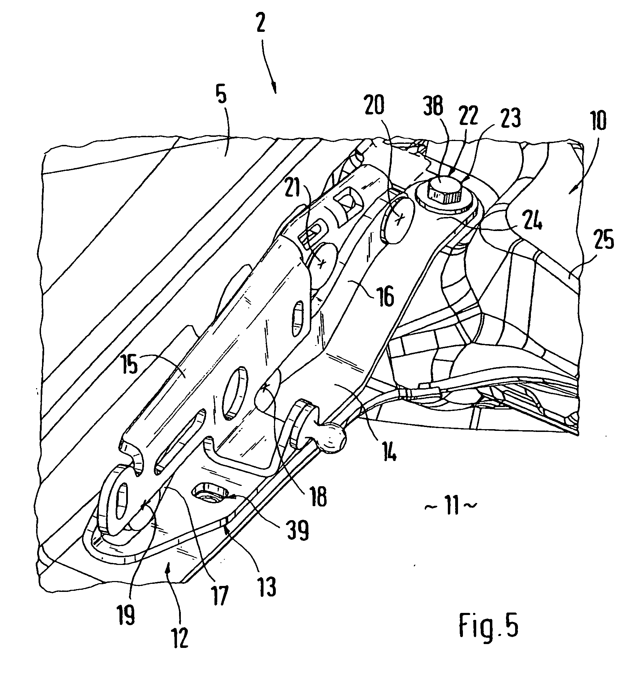

Gemäß den Fig. 2 und 5 ist ein abgewinkelter hochgezogener Endbereich 24 des Trägerteils 14 jedes Scharniers 13 um ein Maß B über das schwenkbare Aufbauteil 6 hinaus nach vorne verlängert, wobei in diesem vorstehenden Endbereich 24 die lösbare Schraubverbindung 23 des Trägerteils 14 am feststehenden Aufbauteil 10 erfolgt.

Das schwenkbare Aufbauteil 6 wird vorzugsweise mittels einer Montagelehre lagerichtig zum angrenzenden feststehenden Aufbau 2 justiert.

Das feststehende Aufbauteil 10 wird durch ein Innenteil 25 und ein als Montageteil ausgebildetes, lösbar befestigtes Außenteil 26 gebildet, wobei das Außenteil 26 die vorgelagerten scharnierseitigen Befestigungspunkte 22 des schwenkbaren Aufbauteils 6 verkleidet.

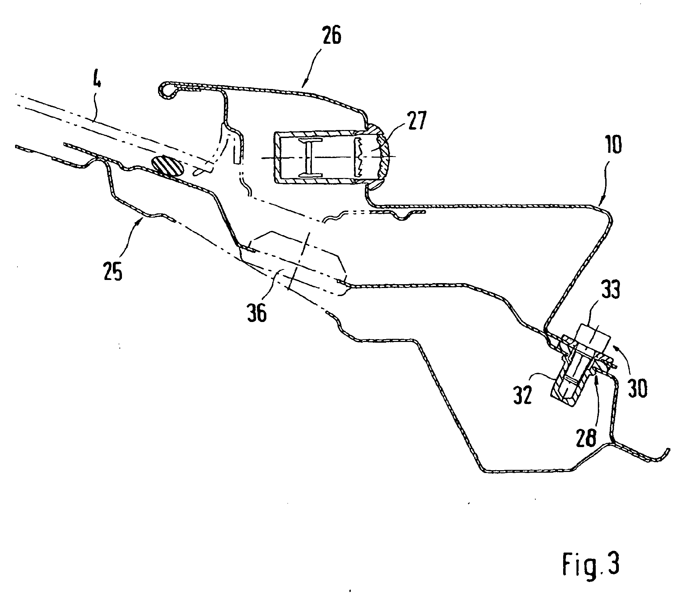

Das Innenteil 25 weist einen mehrschaligen hohlträgerartigen Aufbau auf und nimmt den hinteren Rand der angrenzenden eingeklebten Heckscheibe 4 auf. Das bereichsweise die Karosserieaußenhaut bildende Außenteil 26 ist zweischalig ausgebildet und nimmt in einem mittleren Bereich seiner Quererstreckung eine Zusatzbremsleuchte 27 auf (Fig. 3).

Das Außenteil ist an einem hinteren Bereich 28 und in einem weitere vorneliegenden Bereich 29 örtlich über Schraubverbindungen 30, 31 mit den darunterliegenden Innenteil 25 verbunden.

Die hinteren Schraubverbindungen 30 werden durch am Innenteil 25 vorgesehene Gewindeaufnahmen 32 gebildet, in die von oben her Befestigungsschrauben 33 eingedreht sind (Fig. 3). Die Gewindeaufnahmen sind nach unten hin geschlossen ausgebildet.

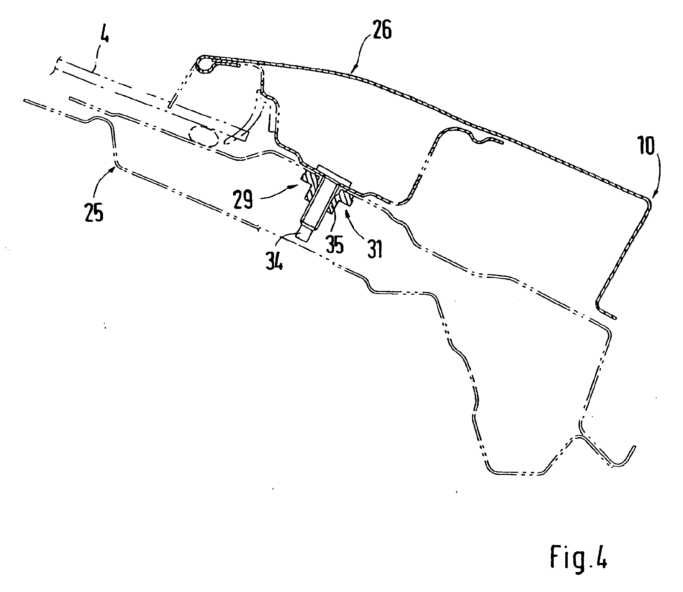

Gemäß Fig. 4 umfassen die vorderen Schraubverbindungen 31 an der inneren Schale des Außenteils 26 angeordnete, bereichsweise nach unten ragende Gewindebolzen 34, auf die von unten her Befestigungsmuttern 35 aufgedreht sind. Die Schraubverbindungen 31 sind durch ein gesetzte Gummitüllen 36 abgedeckt.

Jede Schraubverbindung 23 zum Festlegen des schwenkbaren Aufbauteils 6 umfasst eine am Innenteil 25 vorgesehene Gewindemutter 37, in die von oben her eine Befestigungsschraube 38 eingedreht ist (Fig. 2).

Nach dem Festziehen der beiden vorderen Befestigungsschrauben 38 der Schraubverbindungen 23 ist das schwenkbare Aufbauteil 6 lagerichtig zum angrenzenden Aufbau 2 eingestellt und lässt sich öffnen, so dass nicht näher dargestellte, bei 39 vorgesehene hintere Schraubverbindungen zwischen dem Scharnier 13 und dem feststehenden Aufbau 2 an beiden Scharnieren 13 angezogen werden können (Fig. 5).

Ein derartiges Befestigungskonzept für ein schwenkbares Aufbauteil 6 lässt sich sowohl im Heckbereich als auch im Bugbereich eines Fahrzeuges verwirklichen.

## Patentansprüche

1. Schwenkbares Aufbauteil (6) wie Deckel, Klappe, Haube oder dgl. für ein Kraftfahrzeug (1) mit einem angrenzenden feststehenden Aufbauteil (10), das in eine Öffnung (11) des Aufbaus (2) eingesetzt und umfangseitig von feststehenden Aufbauteilen umgeben ist, wobei zur Anlenkung des schwenkbaren Aufbauteils (6) Scharniere (13) vorgesehen sind, die einerseits mit dem schwenkbaren Aufbauteil (6) und andererseits mit einem angrenzenden feststehenden Aufbauteil (10) verbunden sind und zumindest ein dem feststehenden Aufbauteil (10) zugeordneter Befestigungspunkt (22) jedes Scharniers (13) außerhalb der Kontur des schwenkbaren Aufbauteils (6) angeordnet ist, wobei das angrenzende feststehende Aufbauteil (10) durch ein Innenteil (25) und ein als Montageteil ausgebildetes, lösbar befestigbares Außenteil (26) gebildet wird, wobei dies bereichsweise die Karosserieaußenhaut bildende Außenteil (26) die vorgelagerten Befestigungspunkte (22) des schwenkbaren Aufbauteils (6) abdeckt, **dadurch gekennzeichnet, dass** das Außenteil (26) bereichsweise zweischalig ausgebildet ist und örtlich eine Zusatzbremsleuchte (27) aufnimmt.

2. Schwenkbares Aufbauteil nach Anspruch 1, **dadurch gekennzeichnet, dass** die am feststehenden Aufbauteil (10) vorgesehenen Befestigungspunkte (22) jedes Scharniers (13) als Schraubverbindungen (23) ausgebildet sind.

3. Schwenkbares Aufbauteil nach Anspruch 1, **dadurch gekennzeichnet, dass** ein Endbereich (24) eines Trägerteils (14) jedes Scharniers (13) über das schwenkbare Aufbauteil (6) hinaus verlängert ist, wobei in diesem vorstehenden Endbereich (24) die lösbare Schraubverbindung (23) des Trägerteils (14) am feststehenden Aufbauteil (10) erfolgt.

4. Schwenkbares Aufbauteil nach einem der vorangegangenen Ansprüche **dadurch gekennzeichnet, dass** der schwenkbare Aufbauteil (6) mittels einer Montagelehre lagerichtig zum angrenzenden feststehenden Aufbau (2) justiert wird.

5. Schwenkbares Aufbauteil nach Anspruch 1, **dadurch gekennzeichnet, dass** das Außenteil (20) durch Schraubverbindungen (30, 31) oder dgl. mit dem darunterliegenden Innenteil (25) des Karosserieteils (10) verbunden ist.

## Claims

1. Pivotable body part (6), such as a lid, flap, bonnet or the like for a motor vehicle (1), with an adjacent, fixed body part (10), said pivotable body part (6) being inserted into an opening (11) in the body (2) and being surrounded circumferentially by fixed body parts, wherein hinges (13) are provided for the articulation of the pivotable body part (6), said hinges being connected on one side to the pivotable body part (6) and on the other side to an adjacent, fixed body part (10), and at least one fastening point (22) of each hinge (13), which fastening point is assigned to the fixed body part (10), is arranged outside the contour of the pivotable body part (6), wherein the adjacent, fixed body part (10) is formed by an inner part (25) and a releasably fastenable outer part (26) designed as an assembly part, and wherein said outer part (26) which in some regions forms the outer bodywork skin covers the fastening points (22), which are mounted in front of said outer part, of the pivotable body part (6), **characterized in that** the outer part (26) is designed as two shells in some regions and locally receives an additional brake light (27).

2. Pivotable body part according to Claim 1, **characterized in that** the fastening points (22) of each hinge (13), which fastening points are provided on the fixed body part (10), are designed as screw connections (23).

3. Pivotable body part according to Claim 1, **characterized in that** an end region (24) of a support part (14) of each hinge (13) is extended beyond the pivotable body part (6), the releasable screw connection (23) of the support part (14) to the fixed body part (10) taking place in said protruding end region (24).

4. Pivotable body part according to one of the preceding claims, **characterized in that** the pivotable body part (6) is adjusted to the correct position with respect to the adjacent, fixed body (2) by means of an assembly jig.

5. Pivotable body part according to Claim 1, **characterized in that** the outer part (20) is connected to the inner part (25), which is located therebelow, of the bodywork part (10) by screw connections (30, 31) or the like.

## Revendications

1. Partie de carrosserie (6) pivotante telle qu'un couvercle, une porte de coffre, un capot moteur ou une partie semblable pour un véhicule automobile (1) avec une partie de carrosserie (10) fixe connexe entourée dans une ouverture (11) du capot (2), de façon encastrée et côté périphérie, de parties de carrosserie fixes, des charnières (13) étant prévues pour l'articulation de la partie de carrosserie (6) pivotante, lesdites charnières étant reliées d'une part à la partie de carrosserie (6) pivotante et d'autre part à une partie de carrosserie (10) fixe connexe et au moins un point de fixation (22) de chaque charnière (13) associé à la partie de carrosserie (10) fixe étant disposé à l'extérieur du contour de la partie de carrosserie (6) pivotante, la partie de carrosserie (10) fixe connexe, fixable de façon amovible, étant constituée d'une partie intérieure (25) et d'une partie extérieure (26) prenant la forme d'une partie de montage, permettant ainsi en partie à la partie extérieure (26) formant la peau extérieure de la carrosserie de recouvrir les points de fixation (22) placés en amont de la partie de carrosserie (6) pivotante, **caractérisée en ce que** la partie extérieure (26) est réalisée en partie sous la forme de deux coques et reçoit localement un feu de stop supplémentaire (27).

2. Partie de carrosserie pivotante selon la revendication 1, **caractérisée en ce que** les points de fixation (22) de chaque charnière (13) prévus au niveau de la partie de carrosserie (10) fixe prennent la forme d'assemblages vissés (23).

3. Partie de carrosserie pivotante selon la revendication 1, **caractérisée en ce qu'**une zone d'extrémité (24) d'une partie de support (14) de chaque charnière (13) est rallongée vers l'extérieur au-delà de la partie de carrosserie pivotante (6), l'assemblage vissé (23) amovible de la partie de support (14) se produisant au niveau de la partie de carrosserie (10) fixe dans cette zone d'extrémité (24) saillante.

4. Partie de carrosserie pivotante selon l'une quelconque des revendications précédentes, **caractérisée en ce que** la partie de carrosserie pivotante (6) est ajustée à l'aide d'une jauge de montage positionnée avec précision par rapport à la carrosserie (2) fixe connexe.

5. Partie de carrosserie pivotante selon la revendication 1, **caractérisée en ce que** la partie extérieure (20) est reliée à la partie intérieure (25) inférieure de la partie de carrosserie (10) par l'intermédiaire d'assemblages vissés (30, 31) ou d'une partie semblable.
